# EUROPEAN PATENT APPLICATION

(11) **EP 4 653 486 A1**
(43) Date of publication of application: **26.11.2025**
(21) Application number: 24792598.5
(22) Date of filing: 12.04.2024
(51) Int. Cl.: C08G 65/48, C08G 77/46, C08G 81/00, C08K 5/00, C08L 83/12

(54) **ALKENYL-GROUP-CONTAINING POLYOXYALKYLENE COMPOUND, SILICONE MODIFIER, POLYOXYALKYLENE-MODIFIED SILICONE, AND EMULSION COMPOSITION**

(30) Priority: 20.04.2023 JP 2023069682
(71) Applicant: NOF Corporation, Shibuya-ku Tokyo 150-6019 (JP)
(72) Inventor: MURAI Masaki, Kawasaki-shi, Kanagawa 210-0865 (JP); KAWANO Mizuki, Kawasaki-shi, Kanagawa 210-0865 (JP)
(74) Representative: Williams Powell
(86) International application number: PCT/JP2024/014765
(87) International publication number: WO 2024/219323

(57) **Abstract**

An alkenyl-group-containing polyoxyalkylene compound of Formula (1),

R¹O-(AO)n-R² (1),

where AO is an oxyalkylene group having from 2 to 4 carbon atoms obtained by a dehydration condensation reaction using a phosphinic acid or a phosphinic acid salt, n represents an average number of moles of AO added and is from 3 to 90, R¹ is an alkenyl group having from 3 to 5 carbon atoms, R² is an alkenyl group having from 3 to 5 carbon atoms or a hydrogen atom, and a ratio (Mw/Mn) between a weight average molecular weight (Mw) and a number average molecular weight (Mn) that are calculated from a chromatogram obtained by gel permeation chromatography measurement is from 1.20 to 5.00.

## Description

### Technical field

The present invention relates to an alkenyl-group-containing polyoxyalkylene compound, a silicone modifier, a polyoxyalkylene-modified silicone, and an emulsion composition. In detail, the present invention relates to an alkenyl-group-containing polyoxyalkylene compound that can impart surface activity to organopolysiloxanes; a silicone modifier including this compound; a polyoxyalkylene-modified silicone that is a reaction product of this silicone modifier and an organopolysiloxane; and an emulsion composition containing predetermined amounts of this polyoxyalkylene-modified silicone, an oil agent, and water.

### Background Art

An alkenyl-group-containing polyoxyalkylene compound can be obtained by using an alkaline catalyst or the like to carry out ring-opening addition polymerization of an alkylene oxide such as ethylene oxide or propylene oxide with an initiator such as an allyl alcohol having active hydrogen, or to react a polyoxyalkylene compound with an alkenyl halide. Such an alkenyl-group-containing polyoxyalkylene compound contains a polyoxyalkylene group, which allows adjustment of a wide range of hydrophilicity and hydrophobicity, as well as an alkenyl group, which is a reactive group, and a reaction with other substances enables adjustment of the hydrophilicity and hydrophobicity of the product. Therefore, alkenyl-group-containing polyoxyalkylene compounds are used as, for example, silicone modifiers, polymerizable monomers, and reactive emulsifiers. In particular, silicone modifiers can impart surface activity to organopolysiloxanes, which have excellent heat resistance, weather resistance, mold releasability, water repellency, and physiological inertness.

For example, chemical reaction between a silicone modifier that contains reactive groups such as alkenyl groups and hydrophilic functional groups such as polyoxyalkylene groups and an organopolysiloxane that contains reactive functional groups such as silylidyne groups (hereinafter also referred to as "SiH groups"), can produce a modified organopolysiloxane. When the modified organopolysiloxane obtained by this method is compounded, for example, as a surfactant component in an emulsion composition, the modified organopolysiloxane can impart excellent emulsion stability, and therefore is widely used in many industrial fields, such as cosmetics, toiletries, and paints.

Emulsion compositions are roughly classified into oil-in-water and water-in-oil types depending on the emulsified state, and are used for a variety of purposes, particularly in the cosmetics industry, such as skin care creams, milky lotions, and sunscreens. Among these, water-in-oil emulsions are superior to oil-in-water emulsions as a skin topical agent because water-in-oil emulsions can efficiently spread oil-soluble emollient oils, active ingredients, UV absorbers, etc. onto the skin.

A water-in-oil emulsion can have a sufficient moisturizing feeling and sufficiently provide the effect of the active ingredient because it has an oil continuous phase. However, compared to an oil-in-water emulsion, the water-in-oil emulsion easily causes stickiness upon application, which may result in a poor feeling.

One solution to such a problem in water-in-oil emulsions is increasing the water content. This method can impart a fresh feeling to the skin, resulting in a refreshing feeling of use. Furthermore, an emulsion including a silicone oil as the oil agent can be refreshing, less sticky, and highly water repellent. However, it has been difficult to obtain a stable emulsion using conventional emulsifiers such as polyoxyalkylene fatty acid ester based emulsifiers.

In view of such circumstances, for example, PTL 1 discloses a water-in-oil emulsion that has high stability by using as an emulsifier a polyoxyalkyl- modified silicone that has both a polyglycerin group and a polyoxyalkyl group.

PTL 2 discloses that by using a branched polyoxyalkylene-modified silicone as an emulsifier, excellent emulsification performance can be obtained for various kinds of oil agents such as silicone oil, and further, the resulting emulsion has a refreshing feeling of use and is excellent in emulsion stability and transparency.

### Citation List

### Patent Literature

PTL 1: JP 2012-207078 A
PTL 2: JP 2002-179797 A

### Summary of Invention

### Technical Problem

Although the compositions described in PTL 1 and PTL 2 are excellent in emulsion stability, there is a possibility that their emulsifying power may be insufficient to emulsify a large amount of oil. Therefore, there is a demand for an excellent emulsifier that has high emulsifying power and also provides a fresh feeling to the skin. A silicone modifier generally used is obtained by a polymerization reaction using an alkali catalyst and an alkylene oxide.

The following description is not of publicly known matters, but of matters considered by the inventors.

In the course of developing the present invention, the inventors focused on a compound obtainable by a dehydration condensation reaction using a strong acid catalyst and a diol. It is known that the compound obtained by the dehydration condensation reaction becomes colored, and studies on inhibiting the coloration have been conducted for a long time (see, for example, JP 2004-182974 A). Moreover, in recent cosmetic development, there has been a strong demand for improving the hue of formulations in order to create a luxurious feeling. For highly transparent formulations such as lotions, colorless transparency is required, while for opaque formulations such as milky lotions and creams, a milky white color without any yellowish tinge is required.

However, when a surfactant using a silicone modifier obtained by a dehydration condensation reaction is used as a cosmetic raw material, coloration may not be sufficiently inhibited. Furthermore, dehydration condensation reactions are often carried out under high temperature conditions, and therefore, silicone modifiers are easily degraded and can be gradually hydrolyzed in the presence of moisture in the air and traces of acid to produce odorous substances such as propionaldehyde, which can cause the product to emit an odor over time.

### Solution to Problem

The inventor(s) have conducted extensive research to solve the above problems, and as a result have focused on using, as a silicone modifier, a specific polyether obtained by dehydration condensation of a diol. The inventor(s) have discovered that a surfactant obtained by reacting this silicone modifier with an organopolysiloxane having SiH groups exhibits inhibited coloration. The inventor(s) have also discovered that an emulsion composition using this surfactant has high emulsifying power, and thus allows a large amount of water to be added, imparts a fresh feeling of use upon application, and is excellent in emulsion stability and odor suppression over time.

The present invention includes the following aspects [1] to [4].
[1] An alkenyl-group-containing polyoxyalkylene compound of Formula (1),

   R¹O-(AO)n-R² (1),

   where AO is an oxyalkylene group having from 2 to 4 carbon atoms obtained by a dehydration condensation reaction using a phosphinic acid or a phosphinic acid salt, n represents an average number of moles of AO added and is from 3 to 90, R¹ is an alkenyl group having from 3 to 5 carbon atoms, R² is an alkenyl group having from 3 to 5 carbon atoms or a hydrogen atom, and a ratio (Mw/Mn) between a weight average molecular weight (Mw) and a number average molecular weight (Mn) calculated from a chromatogram obtained by gel permeation chromatography measurement is from 1.20 to 5.00.
[2] A silicone modifier including the alkenyl-group-containing polyoxyalkylene compound according to [1].
[3] A polyoxyalkylene-modified silicone being a reaction product of the silicone modifier according to [2] and a hydrogen organopolysiloxane of Formula (2), 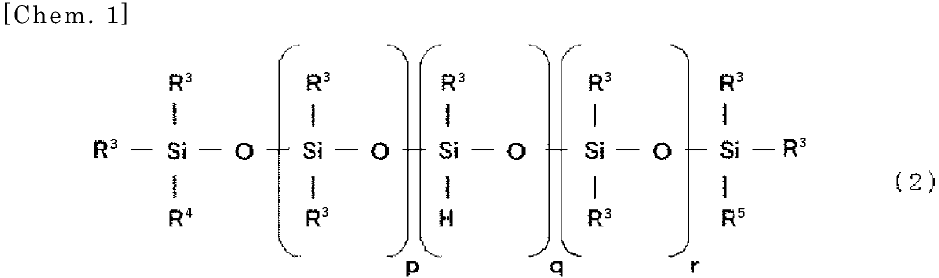 where p is from 1 to 100, q is from 0 to 50, r is from 0 to 100, q/(p + r) is from 0 to 1, each R³ is independently an alkyl group having from 1 to 8 carbon atoms, R⁴ and R⁵ are each independently a hydrogen atom or an alkyl group having from 1 to 8 carbon atoms, and when q = 0, at least one of R⁴ and R⁵ is a hydrogen atom.
[4] An emulsion composition including, (A) from 0.1 to 40 mass% of the polyoxyalkylene-modified silicone according to [3], (B) from 1 to 50 mass% of an oil agent that is liquid at 25°C, and (C) from 10 to 98 mass% of water, in which a mass ratio of Component (B) to Component (A) ((B)/(A)) is from 0.5 to 30.

### Advantageous Effects of Invention

The polyoxyalkylene-modified silicone obtained by reaction of the alkenyl-group-containing polyoxyalkylene compound according to the present invention, with an organopolysiloxane having SiH groups exhibits inhibited coloration, and thus reduces the risk of coloration when used in products such as cosmetic raw materials. Furthermore, the emulsion composition using this polyoxyalkylene-modified silicone as a surfactant has high emulsifying power, and thus allows a large amount of water to be added, imparts a fresh feeling of use upon application, and is excellent in emulsion stability and odor suppression over time.

### Description of Embodiments

Hereinafter, embodiments of the present invention will be described. However, the present invention is not limited to the embodiments described herein, and various modifications are possible without departing from the spirit and scope of the present invention.

Note that, as used herein, any numerical range defined using "from ... to" is intended to include numerical values before and after "to" (the upper and lower limits). For example, "from 2 to 5" means 2 or more and 5 or less.

When a plurality of numerical ranges are described herein in a stepwise fashion, the upper limit value and the lower limit value of each range may be the upper limit value or the lower limit value of any combination of numerical ranges. For example, ranges "from 5 to 20 mass%, from 10 to 15 mass%" for the content of a certain component may include the numerical ranges of "from 5 to 15 mass%", "from 10 to 20 mass%", "from 5 to 10 mass%", and "from 15 to 20 mass%".

Furthermore, regarding any numerical range described herein, the upper or lower limit value of the numerical range can be replaced with a value presented in an example or a value that is uniquely derived from an example.

As used herein, unless otherwise indicated, all numerical values are to be understood as being preceded and modified in all instances by the term "about". It is understood herein that values are subject to the inherent variation characteristic of a measurement technique used to determine such values. In addition, numerical values should at least be interpreted in light of the number of significant digits and by applying rounding techniques.

### <Alkenyl-Group-Containing Polyoxyalkylene Compound>

An alkenyl-group-containing polyoxyalkylene compound of the present invention (hereinafter also referred to as the "inventive compound") is a polyether of Formula (1).

R¹O-(AO)n-R² (1)

In Formula (1), AO is an oxyalkylene group having from 2 to 4 carbon atoms, and the oxyalkylene group may have a branched chain. Examples of AO include an oxyethylene group, an oxypropylene group, an oxytrimethylene group, a 1,2-oxybutylene (oxy-1-ethylethylene group), and a 1,4-oxybutylene group (oxytetramethylene group). AO is preferably an oxyethylene group, an oxypropylene group, or an oxytrimethylene group, more preferably an oxyethylene group. Different oxyalkylene groups may be contained in the molecule of Formula (1), and the different oxyalkylene groups may be bonded in a block or random manner.

The inventive compound is a composition containing two or more polyethers having different numbers of moles of oxyalkylene groups added, and therefore, n in Formula (1) represents an average number of moles of AO added. In Formula (1), n is from 3 to 90, preferably n is from 6 to 70, more preferably n is from 6 to 50, even more preferably n is from 7 to 30, and most preferably n is from 8 to 20. Note that, when two or more different kinds of oxyalkylene groups are contained in the molecule of Formula (1), the sum of the average numbers of moles of the different oxyalkylene groups added may be within the above range.

In Formula (1), R¹ is an alkenyl group having from 3 to 5 carbon atoms, and R² is an alkenyl group having from 3 to 5 carbon atoms or a hydrogen atom. These alkenyl groups may have a branched chain. When R² is an alkenyl group, R¹ and R² may be different alkenyl groups or may be the same alkenyl group. From the viewpoint of reactivity with silicone, each of R¹ and R² is preferably an allyl group which is an alkenyl group having 3 carbon atoms, or a methallyl group which is an alkenyl group having 4 carbon atoms. Each of R¹ and R² is more preferably an allyl group.

The inventive compound is defined by a molecular weight obtained from a chromatogram obtained by gel permeation chromatography (GPC) using a differential refractometer. The chromatogram is a graph representing a relationship between refractive index intensity and elution time. The ratio (Mw/Mn) of the weight average molecular weight (Mw) to the number average molecular weight (Mn) obtained from the chromatogram is in the range from 1.20 to 5.00.

If the ratio (Mw/Mn) is too small, there is a high possibility that an emulsion will not be obtained, whereas if the ratio (Mw/Mn) is too large, there is a high possibility that a fresh feeling of use upon application will not be achieved. The ratio is preferably from 1.25 to 3.00, more preferably from 1.30 to 2.00, even more preferably from 1.40 to 1.80, and most preferably from 1.50 to 1.70.

In the present invention, gel permeation chromatography (GPC) for determining Mw and Mn is carried out under the following conditions, and a chromatogram represented by refractive index intensity and elution time is obtained by using the BORWIN GPC calculation program.
System: SHODEX (registered trademark) GPC101 GPC dedicated system
Differential refractometer: SHODEX (registered trademark) RI-71s
Guard column: SHODEX (registered trademark) KF-G
Column: SHODEX (registered trademark) KF804L, three columns installed in series
Column temperature: 40°C
Developing solvent: Tetrahydrofuran
Flow rate: 1 ml/min

### [Method of Producing Inventive Compound]

The inventive compound can be produced by first obtaining a reaction product of dehydration condensation of a diol of Formula (3) and then alkenylating the reaction product.

HO-(A'O)m-H (3)

In Formula (3), A'O is an oxyalkylene group having from 2 to 4 carbon atoms, and the oxyalkylene group may have a branched chain. Examples of A'O include an oxyethylene group, an oxypropylene group, an oxytrimethylene group, a 1,2-oxybutylene (oxy-1-ethylethylene group), and a 1,4-oxybutylene group (oxytetramethylene group). A'O is preferably an oxyethylene group, an oxypropylene group, or an oxytrimethylene group, more preferably an oxyethylene group. m is an integer from 1 to 3. When m is 2 or 3, different oxyalkylene groups may be contained in the molecule of Formula (3).

Examples of the diol of the above Formula (3) include ethylene glycol, diethylene glycol, triethylene glycol, 1,2-propanediol, 1,3-propanediol, dipropylene glycol, tripropylene glycol, 1,2-butylene glycol, and 1,4-butylene glycol. One selected from these diols can be used alone, or two or more can be used in combination. From the viewpoint of the stability of the resulting emulsion, the diol is preferably triethylene glycol and tripropylene glycol, and more preferably triethylene glycol.

The reaction temperature during the dehydration condensation is preferably from 100 to 200°C, and from the viewpoints of the reactivity and coloration of the resulting silicone modifier, more preferably from 110 to 140°C. Further, the pressure during production is atmospheric pressure or less, preferably about 10 kPa or less, and more preferably about 3 kPa or less.

In the dehydration condensation reaction, a dehydration condensation catalyst is typically used. Examples of the dehydration condensation catalysts include homogeneous catalysts such as a Lewis acid, a Bronsted acid, a superacid, and a mixture thereof. Examples include an inorganic acid, an organic sulfonic acid, a heteropolyacid, and a metal salt thereof. More specific examples include sulfuric acid, fluorosulfonic acid, phosphoric acid, p-toluenesulfonic acid, benzenesulfonic acid, phosphotungstic acid, phosphomolybdic acid, trifluoromethanesulfonic acid, 1,1,2,2-tetrafluoroethanesulfonic acid, 1,1,1,2,3,3-hexafluoropropanesulfonic acid, bismuth triflate, yttrium triflate, ytterbium triflate, neodymium triflate, lanthanum triflate, scandium triflate, and zirconium triflate. Heterogeneous catalysts may also be used, such as zeolite, fluorinated alumina, acid-treated silica, acid-treated silica-alumina, heteropolyacids, zirconia-supported heteropolyacids, titania, alumina, and silica. The homogeneous catalysts mentioned above are preferred, and sulfuric acid is more preferred.

The amount of the dehydration condensation catalyst used is preferably from 0.1 to 10 parts by mass, and more preferably from 0.5 to 8 parts by mass, based on 100 parts by mass of the diol used.

In the method according to the present invention, the dehydration condensation is conducted in the presence of phosphinic acid or a phosphinic acid salt, and as a result, AO in Formula (1), that is, an oxyalkylene group having from 2 to 4 carbon atoms, is obtained.

The phosphinic acid salt is preferably an alkali metal salt of phosphinic acid, examples of which include sodium phosphinate and potassium phosphinate.

From the viewpoints of availability and coloration inhibition, phosphinic acid or sodium phosphinate is preferably used, and phosphinic acid is more preferably used.

The amount of phosphinic acid or a phosphinic acid salt used is preferably from 0.05 to 10 parts by mass, and more preferably from 0.1 to 5 parts by mass, based on 100 parts by mass of the diol used. Note that phosphinic acid and a phosphinic acid salt may be used in combination, and in that case, the total amount of both is preferably within the above range.

The reaction product after the dehydration condensation reaction preferably has a hydroxyl value from 25 to 750 mgKOH/g, and more preferably has a hydroxyl value from 50 to 500 mgKOH/g. Note that the hydroxyl value is measured in accordance with JIS K 1557-1.

In addition, the Hazen color number (APHA) of the reaction product is preferably from 0 to 500, and more preferably from 0 to 300. Note that the Hazen color number (APHA) is measured in accordance with JIS K 0071-1.

When the inventive compound has different oxyalkylene groups, the molar ratio of each oxyalkylene group can be determined, for example, by using a proton nuclear magnetic resonance (H-NMR) spectrometer. For example, when the inventive compound has an oxyethylene group and an oxypropylene group, the molar ratio, oxyethylene group:oxypropylene group can be calculated from the following equation using an integral value (P₁) of the peaks of methyl groups of oxypropylene groups and an integral values (P₂) of the peaks of methylene groups of oxyethylene groups and oxypropylene groups, measured by a proton nuclear magnetic resonance (H-NMR) spectrometer. Furthermore, the number of moles added can be calculated by calculating the total molecular weight from the hydroxyl value.

### Oxyethylene Group:Oxypropylene Group = {(P₂ - P₁)/4}:(P₁/3)

The alkenylating can then be carried out by reacting the reaction product with an alkenyl halide.

The alkenyl halide used is a halide represented by R¹-X or R^{2'}-X. R¹-X and R^{2'}-X may be different or the same. Either or both of R¹-X and R^{2'}-X can be used in the alkenylating. R¹ in R¹-X has the same meaning as R¹ in Formula (1), and R^{2'} in R^{2'}-X has the same meaning as the alkenyl group having from 3 to 5 carbon atoms as R² in Formula (1). X is a halogen. Examples of the halogen include fluorine, chlorine, bromine and iodine, one of which is selected to be applied as the halogen.

The amount of the alkenyl halide used is preferably from 4 to 120 parts by mass, and more preferably from 8 to 75 parts by mass, based on 100 parts by mass of the reaction product.

The alkenylating is carried out under a basic condition, for example in the presence of a strong base.

The reaction temperature during the alkenylating is preferably from 60 to 200°C, and more preferably from 70 to 140°C. Further, the pressure during production is atmospheric pressure or less, preferably about 10 kPa or less, and more preferably about 3 kPa or less.

The alkenyl-group-containing polyoxyalkylene compound thus obtained as the inventive compound preferably has a degree of unsaturation from 0.40 to 13.00 meq/g, and more preferably has a degree of unsaturation from 0.90 to 8.90 meq/g. Note that the degree of unsaturation is measured in accordance with JIS K 1557-3.

The Hazen color number (APHA) of the inventive compound is preferably from 0 to 500, and more preferably from 0 to 400. Note that the Hazen color number (APHA) is measured in accordance with JIS K 0071-1.

In summary, the method of producing the alkenyl-group-containing polyoxyalkylene compound of the above Formula (1) includes a step of subjecting the diol of the above Formula (3) to a dehydration condensation reaction in the presence of phosphinic acid or a phosphinic acid salt to obtain a reaction product, and a step of reacting the obtained reaction product with R¹-X and/or R^{2'}-X.

### <Silicone Modifier>

A silicone modifier of the present invention includes an alkenyl-group-containing polyoxyalkylene compound, which is the inventive compound that functions as a silicone modifier.

### <Polyoxyalkylene-modified Silicone>

A polyoxyalkylene-modified silicone of the present invention is a reaction product of the inventive compound, which functions as a silicone modifier, and a hydrogen organopolysiloxane of Formula (2). In other words, this reaction product is a product from hydrosilylation reaction of the inventive compound with the hydrogen organopolysiloxane of Formula (2).

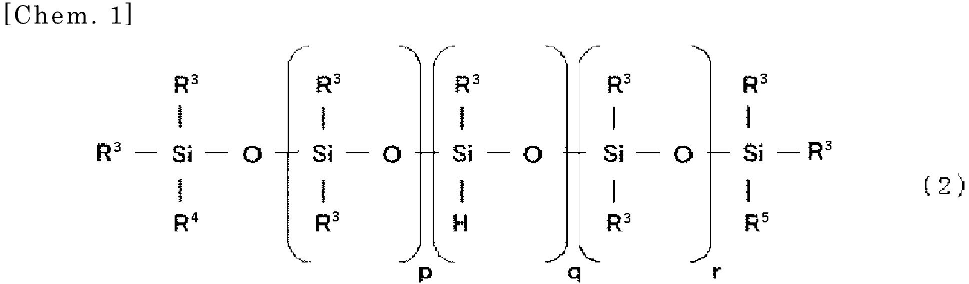

In Formula (2), p is from 1 to 100, q is from 0 to 50, r is from 0 to 100, and q/(p + r) is from 0 to 1. From the viewpoint of the stability of an emulsion composition of the present invention described later, p is preferably 80 or less, more preferably 50 or less, and even more preferably 20 or less. q is preferably 30 or less, more preferably 10 or less, and even more preferably 0. r is preferably 80 or less, more preferably 50 or less, and even more preferably 20 or less. q/(p + r) is preferably 0.4 or less, and more preferably 0.

A plurality of R³ groups included in Formula (2) are each independently an alkyl group having from 1 to 8 carbon atoms, and the alkyl group may have a branched chain. Examples of R³ include a methyl group, an ethyl group, a propyl group, an isopropyl group, a butyl group, an isobutyl group, a hexyl group, and an octyl group, and R³ is preferably a methyl group, an ethyl group, a propyl group, an isopropyl group, a butyl group, or an isobutyl group.

R⁴ and R⁵ are each independently a hydrogen atom or an alkyl group having from 1 to 8 carbon atoms. However, when q = 0, at least one of R⁴ and R⁵ is a hydrogen atom.

The alkyl group having from 1 to 8 carbon atoms may have a branched chain. Examples of the alkyl group having from 1 to 8 carbon atoms include a methyl group, an ethyl group, a propyl group, an isopropyl group, a butyl group, an isobutyl group, a hexyl group, and an octyl group, and the alkyl group is preferably a methyl group or an ethyl group.

The hydrogen organopolysiloxane of Formula (2) can be produced by a publicly known method, but commercially available products can also be used. An example of such a product is "Methyl H Siloxane-Dimethyl Siloxane Copolymer" manufactured by Gelest, Inc., product code HMS-082 (in Formula (2), R³, R⁴, and R⁵ are all methyl groups, p is 75, q is 6.5, and r is 0).

The reaction between the inventive compound and the hydrogen organopolysiloxane is typically carried out by mixing the two in the presence of a catalyst. Examples of the catalyst to be used include chloroplatinic acid hexahydrate, alcohol-modified chloroplatinic acid, and chloroplatinic acid-vinylsiloxane complex. The amount of the catalyst used is preferably 500 ppm or less, and more preferably 200 ppm or less in terms of platinum, based on the total weight of the inventive compound and the hydrogen organopolysiloxane.

The reaction temperature is preferably from 50 to 130°C, and more preferably from 60 to 110°C. FT-IR measurement can be used to confirm completion of the reaction, and the reaction is carried out until the absorption at from 2100 to 2300 cm⁻¹ derived from SiH groups disappears.

### <Emulsion Composition>

An emulsion composition of the present invention contains (A) from 0.1 to 40 mass% of the polyoxyalkylene-modified silicone of the present invention, (B) from 1 to 50 mass% of an oil agent that is liquid at 25°C, and (C) from 10 to 98 mass% of water.

In the emulsion composition of the present invention, the total amount of Component (A), Component (B), and Component (C) is 100 mass%.

### [Component (A): Polyoxyalkylene-modified Silicone]

Component (A) used in the emulsion composition of the present invention is the above-described polyoxyalkylene-modified silicone that functions as a surfactant. The content of Component (A) in the emulsion composition of the present invention is from 0.1 to 40 mass%, preferably from 0.5 to 30 mass%, more preferably from 1 to 20 mass%, and even more preferably from 3 to 15 mass%. If the content of Component (A) is too small, the surface activity of Component (A) is excessively low, which may result in formation of an unstable emulsion composition. If the content of Component (A) is too large, the surface activity of Component (A) is excessively high, and therefore gelation or the like occurs in some degree, which may result in formation of an unstable emulsion composition.

### [Component (B): Oil Agent That Is Liquid at 25°C]

The oil agent as Component (B) is one or more kinds of oil agents selected from the group consisting of hydrocarbon oils that are liquid at 25°C, ester oils that are liquid at 25°C, triglycerides that are liquid at 25°C, animal and vegetable oils that are liquid at 25°C, and silicone oils that are liquid at 25°C.

Examples of the hydrocarbon oil include a liquid paraffin, hydrogenated polyisobutene, hydrogenated polydecene, squalane, squalene, pristane, light isoparaffin, light liquid isoparaffin, heavy liquid isoparaffin, liquid isoparaffin, tetradecene, isohexadecane, isododecane, and α-olefin oligomer. Preferred examples include a liquid paraffin and hydrogenated polyisobutene.

Examples of the ester oil include ethyl oleate, ethyl linoleate, isopropyl myristate, isopropyl palmitate, isopropyl isostearate, cetyl 2-ethylhexanoate, cetyl palmitate, 2-ethylhexyl palmitate, isostearyl isostearate, myristyl myristate, cetyl myristate, isostearyl myristate, isocetyl myristate, hexyl laurate, decyl oleate, octyldodecyl oleate, isononyl isononanoate, and 2-ethylhexyl isononanoate.

The triglyceride is an ester of glycerin and fatty acid, and examples of the fatty acid include caproic acid, caprylic acid, capric acid, 2-ethylhexanoic acid, isotridecanoic acid, isopalmitic acid, isostearic acid, eicosanoic acid, and oleic acid.

Examples of the animal and vegetable oils include olive oil, sunflower oil, safflower oil, castor oil, and camellia oil.

Examples of the silicone oil include dimethicone, cyclomethicone, and phenyldimethicone, and the silicone oil is preferably dimethicone or cyclomethicone.

The oil agent used as Component (B) is preferably a silicone oil from the viewpoint of compatibility with the surfactant as Component (A).

The content of Component (B) in the emulsion composition of the present invention is from 1 to 50 mass%, preferably from 2 to 40 mass%, more preferably from 5 to 30 mass%, and even more preferably from 10 to 25 mass%. If the content of Component (B) is too small, the area in which Component (A) functions is excessively small, which may result in formation of an unstable emulsion composition. If the content of Component (B) is too large, the area in which Component (A) functions is excessively large, which may result in formation of an unstable emulsion composition.

The calculated total amount of Component (A) and Component (B) in the emulsion composition of the present invention is from 1.1 to 90 mass%, preferably from 5 to 80 mass%, more preferably from 10 to 70 mass%, and even more preferably from 15 to 60 mass%. If the total amount of Component (A) and Component (B) is too small, the content of Component (C) described below is excessively large, which may result in formation of an unstable emulsion composition. If the total amount of Component (A) and Component (B) is too large, the content of Component (C) is excessively small, which may result in formation of an unstable emulsion composition.

### [Component (C): Water]

Component (C) used in the emulsion composition of the present invention is water. The water is not particularly limited. For example, purified water such as distilled water or ion-exchanged water, physiological saline, an aqueous phosphate buffer solution, and the like can be used.

The content of Component (C) in the emulsion composition of the present invention is from 10 to 98 mass%, preferably from 20 to 90 mass%, more preferably from 40 to 85 mass%, and even more preferably from 45 to 80 mass%. A too small or too large content of Component (C) may result in, for example, excessive viscosity and partial gelation, and thus result in formation of an unstable emulsion composition.

The ratio of the mass of Component (B) to the mass of Component (A) ((B)/(A)) is preferably from 0.5 to 30, more preferably 1 to 20, even more preferably from 1 to 15, still even more preferably from 1 to 10, and most preferably from 1 to 6, from the viewpoints of emulsion stability and a fresh feeling upon application.

The emulsion composition of the present invention is prepared by blending water as Component (C) into Component (A) and Component (B), which are described above. Various commonly used components can be blended into the emulsion composition of the present invention as necessary. For example, in the field of cosmetic materials, moisturizers, preservatives, antioxidants, UV absorbers, beauty ingredients, fragrances, water-soluble polymers, dyes, pigments, organic powders, and the like can be compounded.

The form of the emulsion composition of the present invention is not particularly limited, but it can be used in a wide range of applications such as cosmetic materials and paints having excellent emulsion stability. In particular, the emulsion composition is suitable, in the field of cosmetic materials, for oil-based cosmetics such as milky lotions, cleansing oils, and hair oils.

### Examples

The present invention has been described above by presenting preferred embodiments for ease of understanding. Hereinafter, the present invention will be described in more detail and specifically with reference to synthesis examples, examples, and comparative examples. However, the above description and the following synthesis examples, examples, and comparative examples are provided for illustrative purposes only and are not provided for the purpose of limiting the present invention.

Note that intermediates, silicone modifiers, and surfactants in the following synthesis examples were analyzed by a method described below.

### (Analysis Method)

Hydroxyl Value: JIS K 1557-1
Degree of Unsaturation: JIS K 1557-3
Hazen Color Number (APHA): JIS K 0071-1

### [Synthesis Example A-1]

Into a 1-liter four-neck flask equipped with a stirrer, a nitrogen inlet tube, a thermocouple, and a cooling tube, 750 g of triethylene glycol (manufactured by KANTO CHEMICAL CO.,INC.), 9.8 g of sulfuric acid (manufactured by KANTO CHEMICAL CO.,INC.), and 6 g of phosphinic acid (manufactured by KANTO CHEMICAL CO.,INC.) were put. After nitrogen substitution, the temperature was raised to 120°C, and the reaction was carried out for 23 hours under conditions of a vacuum degree of 6 ka and nitrogen bubbling. Two types of adsorbents (KYOWAAD #700 and #1000, manufactured by Kyowa Chemical Industry Co., Ltd.) were added in an amount of 5 g each, adsorption treatment was carried out for 1 hour at 90°C, -0.097 MPa (gauge pressure) or less with nitrogen bubbling, and 525 g of an intermediate (A-1) was obtained after filtration. The hydroxyl value was 251 mgKOH/g, the average number of moles of oxyethylene groups added was 10, and the APHA was 60.

To 300 g of the obtained intermediate (A-1), 113 g of potassium hydroxide and 123 g of allyl chloride were added. After nitrogen substitution, the reaction was carried out at 120°C for 3 hours. 450 g of water was added, and the resultant mixture was stirred for 10 minutes and then allowed to stand at 80°C for 1 hour. The upper layer of the mixture was collected and neutralized, and then water was removed by nitrogen bubbling at 80°C. Thereafter, treatment was conducted for 2 hours with nitrogen bubbling at 80°C, -0.097 MPa (gauge pressure) or less, and a silicone modifier (A-1) was obtained after filtration. The degree of unsaturation was 3.36 meq/g, the APHA was 150, and the Mw/Mn was 1.45.

Into a 1-liter four-neck flask equipped with a stirrer, a nitrogen inlet tube, a thermocouple, and a cooling tube, 80 g (SiH equivalent: 85 meq) of hydrogendimethylpolysiloxane (HMS-082 (manufactured by Gelest, Inc.), SiH equivalent per gram: 1.06 meq/g) and 35 g (unsaturated equivalent: 118 meq) of the silicone modifier (A-1) were put. As a catalyst, an isopropyl alcohol solution of chloroplatinic acid hexahydrate (1 × 10⁻³ mol/L) was further added to the flask in an amount corresponding to 100 ppm in terms of platinum. The mixture was allowed to react at 90°C while stirring the mixture under a nitrogen atmosphere. Sampling was performed, and an N/10 solution of potassium hydroxide in isopropyl alcohol was added to continue the reaction until hydrogen gas was no longer generated, and FT-IR measurement was conducted to confirm that the absorption at 2100 to 2300 cm⁻¹ derived from SiH groups had disappeared. As a result, a surfactant (A-1) was obtained.

### [Synthesis Example A-2]

Into a 1-liter four-neck flask equipped with a stirrer, a nitrogen inlet tube, a thermocouple, and a cooling tube, 375 g of triethylene glycol (manufactured by KANTO CHEMICAL CO.,INC.), 480 g of tripropylene glycol (manufactured by Tokyo Chemical Industry Co., Ltd.), 9.8 g of sulfuric acid (manufactured by KANTO CHEMICAL CO.,INC.), and 6 g of phosphinic acid (manufactured by KANTO CHEMICAL CO.,INC.) were put. After nitrogen substitution, the temperature was raised to 120°C, and the reaction was carried out for 23 hours under conditions of a vacuum degree of 6 ka and nitrogen bubbling. Two types of adsorbents (KYOWAAD #700 and #1000, manufactured by Kyowa Chemical Industry Co., Ltd.) were added in an amount of 5 g each, adsorption treatment was carried out for 1 hour at 90°C, -0.097 MPa (gauge pressure) or less with nitrogen bubbling, and 550 g of an intermediate (A-2) was obtained after filtration. The hydroxyl value was 220 mgKOH/g, the average number of moles of oxyethylene groups added was 5, the average number of moles of oxypropylene groups added was 4, and the APHA was 80.

To 300 g of the obtained intermediate (A-2), 99 g of potassium hydroxide and 108 g of allyl chloride were added. After nitrogen substitution, the reaction was carried out at 120°C for 3 hours. 396 g of water was added, and the resultant mixture was stirred for 10 minutes and then allowed to stand at 80°C for 1 hour. The upper layer of the mixture was collected and neutralized, and then water was removed by nitrogen bubbling at 80°C. Thereafter, treatment was conducted for 2 hours with nitrogen bubbling at 80°C, -0.097 MPa (gauge pressure) or less, and a silicone modifier (A-2) was obtained after filtration. The degree of unsaturation was 3.11 meq/g, the APHA was 200, and the Mw/Mn was 1.30.

Into a 1-liter four-neck flask equipped with a stirrer, a nitrogen inlet tube, a thermocouple, and a cooling tube, 80 g (SiH equivalent: 85 meq) of hydrogendimethylpolysiloxane (HMS-082 (manufactured by Gelest, Inc.), SiH equivalent per gram: 1.06 meq/g), and 38 g (unsaturated equivalent: 118 meq) of the silicone modifier (A-2) were put. As a catalyst, an isopropyl alcohol solution of chloroplatinic acid hexahydrate (1 × 10⁻³ mol/L) was further added to the flask in an amount corresponding to 100 ppm in terms of platinum. The mixture was allowed to react at 90°C while stirring the mixture under a nitrogen atmosphere. Sampling was performed, and an N/10 solution of potassium hydroxide in isopropyl alcohol was added to continue the reaction until hydrogen gas was no longer generated, and FT-IR measurement was conducted to confirm that the absorption at 2100 to 2300 cm⁻¹ derived from SiH groups had disappeared. As a result, a surfactant (A-2) was obtained.

### [Synthesis Example A-3]

To 200 g of the intermediate (A-1) of Synthesis Example A-1, 75 g of potassium hydroxide and 112 g of methallyl chloride were added. After nitrogen substitution, the reaction was carried out at 120°C for 3 hours. 301 g of water was added, and the resultant mixture was stirred for 10 minutes and then allowed to stand at 80°C for 1 hour. The upper layer of the mixture was collected and neutralized, and then water was removed by nitrogen bubbling at 80°C. Thereafter, treatment was conducted for 2 hours with nitrogen bubbling at 80°C, - 0.097 MPa (gauge pressure) or less, and a silicone modifier (A-3) was obtained after filtration. The degree of unsaturation was 3.20 meq/g, the APHA was 150, and the Mw/Mn was 1.45.

Into a 500-mL four-neck flask equipped with a stirrer, a nitrogen inlet tube, a thermocouple, and a cooling tube, 80 g (SiH equivalent: 85 meq) of hydrogendimethylpolysiloxane (HMS-082 (manufactured by Gelest, Inc.), SiH equivalent per gram: 1.06 meq/g), and 38 g (unsaturated equivalent: 118 meq) of the silicone modifier (A-3) were put. As a catalyst, an isopropyl alcohol solution of chloroplatinic acid hexahydrate (1 × 10⁻³ mol/L) was further added to the flask in an amount corresponding to 100 ppm in terms of platinum. The mixture was allowed to react at 90°C while stirring the mixture under a nitrogen atmosphere. Sampling was performed, and an N/10 solution of potassium hydroxide in isopropyl alcohol was added to continue the reaction until hydrogen gas was no longer generated, and FT-IR measurement was conducted to confirm that the absorption at 2100 to 2300 cm⁻¹ derived from SiH groups had disappeared. As a result, a surfactant (A-3) was obtained.

### [Synthesis Example A'-1]

Into a 1-liter four-neck flask equipped with a stirrer, a nitrogen inlet tube, a thermocouple, and a cooling tube, 750 g of triethylene glycol (KANTO CHEMICAL CO.,INC.) and 9.8 g of sulfuric acid (KANTO CHEMICAL CO.,INC.) were put. After nitrogen substitution, the temperature was raised to 120°C, and the reaction was carried out for 25 hours under conditions of a vacuum degree of 6 ka and nitrogen bubbling. Two types of adsorbents (KYOWAAD #700 and #1000, manufactured by Kyowa Chemical Industry Co., Ltd.) were added in an amount of 5 g each, adsorption treatment was carried out for 1 hour at 90°C, -0.097 MPa (gauge pressure) or less with nitrogen bubbling, and 550 g of an intermediate (A'-1) was obtained after filtration. The hydroxyl value was 260 mgKOH/g, the average number of moles of oxyethylene groups added was 10, and the APHA was 500.

To 300 g of the obtained intermediate (A'-1), 117 g of potassium hydroxide and 128 g of allyl chloride were added. After nitrogen substitution, the reaction was carried out at 120°C for 3 hours. 468 g of water was added, and the resultant mixture was stirred for 10 minutes and then allowed to stand at 80°C for 1 hour. The upper layer of the mixture was collected and neutralized, and then water was removed by nitrogen bubbling at 80°C. Thereafter, treatment was conducted for 2 hours with nitrogen bubbling at 80°C, -0.097 MPa (gauge pressure) or less, and a silicone modifier (A'-1) was obtained after filtration. The degree of unsaturation was 3.45 meq/g, the APHA was 500 or more, and the Mw/Mn was 1.55.

Into a 1-liter four-neck flask equipped with a stirrer, a nitrogen inlet tube, a thermocouple, and a cooling tube, 80 g (SiH equivalent: 85 meq) of hydrogendimethylpolysiloxane (HMS-082 (manufactured by Gelest, Inc.), SiH equivalent per gram: 1.06 meq/g) and 34 g (unsaturated equivalent: 117 meq) of the silicone modifier (A'-1) were put. As a catalyst, an isopropyl alcohol solution of chloroplatinic acid hexahydrate (1 × 10⁻³ mol/L) was further added to the flask in an amount corresponding to 100 ppm in terms of platinum. The mixture was allowed to react at 90°C while stirring the mixture under a nitrogen atmosphere. Sampling was performed, and an N/10 solution of potassium hydroxide in isopropyl alcohol was added to continue the reaction until hydrogen gas was no longer generated, and FT-IR measurement was conducted to confirm that the absorption at 2100 to 2300 cm⁻¹ derived from SiH groups had disappeared. As a result, a surfactant (A'-1) was obtained.

### [Synthesis Example A'-2]

A silicone modifier (A'-2) of Formula (4) was obtained by using a publicly known production technique. The degree of unsaturation was 4.00 meq/g, the APHA was 50, and the Mw/Mn was 1.05.

CH₂=CH-CH₂-O-(EO)₉-CH₂-CH=CH₂ (4)

Into a 1-liter four-neck flask equipped with a stirrer, a nitrogen inlet tube, a thermocouple, and a cooling tube, 80 g (SiH equivalent: 85 meq) of hydrogendimethylpolysiloxane (HMS-082 (manufactured by Gelest, Inc.), SiH equivalent per gram: 1.06 meq/g) and 30 g (unsaturated equivalent: 120 meq) of the silicone modifier (A'-2) were put. As a catalyst, an isopropyl alcohol solution of chloroplatinic acid hexahydrate (1 × 10⁻³ mol/L) was further added to the flask in an amount corresponding to 100 ppm in terms of platinum. The mixture was allowed to react at 90°C while stirring the mixture under a nitrogen atmosphere. Sampling was performed, and an N/10 solution of potassium hydroxide in isopropyl alcohol was added to continue the reaction until hydrogen gas was no longer generated, and FT-IR measurement was conducted to confirm that the absorption at 2100 to 2300 cm⁻¹ derived from SiH groups had disappeared. As a result, a surfactant (A'-2) was obtained.

The silicone modifiers and surfactants produced in Synthesis Examples A-1 to A'-2 are shown in Table 1.

### [Table 1]

**Table 1**

| Surfactant | Raw Material Used in Dehydration Condensation | Use of Phosphinic Acid or Phosphinic Acid Salt | Silicone Modifier Analysis Values | | | | | |
|---|---|---|---|---|---|---|---|---|
| | | | (Average Number of Moles Added)/n | | APHA | Mw | Mn | Mw/Mn |
| | | | Oxyethylene Group | Oxypropylene Group | | | | |
| A-1 | Triethylene Glycol | Yes | 10 | - | 150 | 579 | 399 | 1.45 |
| A-2 | Triethylene Glycol/ Tripropylene Glycol | Yes | 5 | 4 | 200 | 590 | 455 | 1.30 |
| A-3 | Triethylene Glycol | Yes | 10 | - | 150 | 579 | 399 | 1.45 |
| A'-1 | Triethylene Glycol | No | 10 | - | 500 ≤ | 651 | 420 | 1.55 |
| A'-2 | - | - | 9 | - | 50 | 444 | 422 | 1.05 |

### <Examples 1 to 6>

Emulsion cosmetics having compositions shown in Table 2 were prepared by the following production method. Then, sensory evaluations were carried out in terms of the freshness upon application, emulsion stability, and odor over time for each of the emulsion cosmetics having different compositions. The results are shown in Table 2.

Note that panelists conducting the evaluations were trained in a preliminary evaluation test conducted prior to the evaluation test such that the levels of evaluation corresponding to their respective scores were roughly the same, to equalize evaluation criteria of the panelists.

### <Comparative Examples 1 to 4>

Emulsion cosmetics having compositions shown in Table 3 were prepared by the following production method. Then, sensory evaluations were carried out in terms of the freshness upon application, emulsion stability, and odor over time for each of the emulsion cosmetics having different compositions. The results are shown in Table 3.

### <Production Method>

Step I: Components (A) and (B) shown in the table were placed in a beaker and stirred at room temperature (25°C) until a uniform mixture was formed.

Step II: Component (C) (water) was gradually added to the composition prepared in Step I while stirring with a homomixer to emulsify the composition. As a result, an emulsion cosmetic was obtained.

The following Components (B) were used.
(B-1): KF-995 (decamethylcyclopentasiloxane, manufactured by Shin-Etsu Chemical Co., Ltd.)
(B-2): Liquid paraffin (manufactured by FUJIFILM Wako Pure Chemical Corporation)
(B-3): UNISTER MB-816 (ethylhexyl palmitate, manufactured by NOF CORPORATION)

### <Freshness Upon Application>

0.5 g of the emulsion cosmetic was applied to forearms of five panelists, and sensory evaluations of freshness were carried out according to the following criteria.
3 points: Panelist felt a strong sense of freshness and hardly felt sticky.
2 points: Panelist felt a slight sense of freshness and also felt slightly sticky.
1 point: Panelist hardly felt a sense of freshness and felt sticky.

Furthermore, the total score of the evaluations by the five panelists was rated according to the following criteria.
Excellent: 12 points or more
Good: 9 points or more, less than 12 points
Marginal: Less than 9 points

### <Emulsion Stability>

30 g of the emulsion composition was placed in 50-ml transparent glass containers. The containers were sealed and stored at different temperatures (0°C, 25°C, or 40°C) for one month. After one month, the appearance of the samples stored at the respective temperatures was observed and rated according to the following criteria.
Good: There is no change in the appearance of the sample after storage at all the temperatures.
Poor: There is a change in the appearance of the sample after storage (change from a uniform appearance to separation of an oil layer or an aqueous layer) at one or more of the temperatures.

### <Changes in Odor Over Time>

30 g of the emulsion composition was placed in a 50-ml transparent glass container. The container was sealed and stored at 40°C for one month. After one month, five panelists each carried out a sensory evaluation of the aldehyde odor according to the following criteria.
3 points: Panelist hardly sensed an odor.
2 points: Panelist sensed a slight odor.
1 point: Panelist sensed an odor.

Furthermore, the total score of the evaluations by the five panelists was rated according to the following criteria.
Excellent: 12 points or more
Good: 9 points or more, less than 12 points
Marginal: Less than 9 points

### [Table 2]

**Table 2**

| | | Examples | | | | | |
|---|---|---|---|---|---|---|---|
| | | 1 | 2 | 3 | 4 | 5 | 6 |
| Emulsion Composition | Surfactant (A-1) | 5 | | 10 | 5 | 10 | |
| | Surfactant (A-2) | | 5 | | | | |
| | Surfactant (A-3) | | | | | | 5 |
| | Component (B-1) | 15 | 15 | 40 | | 10 | 15 |
| | Component (B-2) | | | | 15 | | |
| | Component (B-3) | | | | | 10 | |
| | Component (C) | 80 | 80 | 50 | 80 | 70 | 80 |
| Total (%) | | 100 | 100 | 100 | 100 | 100 | 100 |
| (B)/(A) | | 3.0 | 3.0 | 4.0 | 3.0 | 2.0 | 3.0 |
| Freshness upon Application | | Excellent 14 | Excellent 13 | Good 10 | Excellent 12 | Good 11 | Excellent 12 |
| Emulsion Stability | | Good | Good | Good | Good | Good | Good |
| Odor over Time | | Excellent 13 | Good 11 | Excellent 12 | Excellent 13 | Good 10 | Excellent 12 |

### [Table 3]

**Table 3**

| | | Comparative Examples | | | |
|---|---|---|---|---|---|
| | | 1 | 2 | 3 | 4 |
| Emulsion Composition | Surfactant (A-1) | 30 | | | |
| | Surfactant (A'-1) | | 5 | | |
| | Surfactant (A'-2) | | | 5 | 15 |
| | Component (B-1) | 10 | 15 | 15 | 30 |
| | Component (C) | 60 | 80 | 80 | 55 |
| Total (%) | | 100 | 100 | 100 | 100 |
| (B)/(A) | | 0.3 | 3.0 | 3.0 | 2.0 |
| Freshness upon Application | | Marginal 8 | Excellent 14 | Marginal 6 | Marginal 8 |
| Emulsion Stability | | Good | Good | Good | Good |
| Odor over Time | | Good 9 | Marginal 7 | Good 11 | Marginal 8 |

The emulsion cosmetics of Examples 1 to 6 according to the present invention had a fresh feeling upon application, were excellent in emulsion stability, and suppressed generation of odor over time.

The emulsion cosmetics of Comparative Examples 1 to 4, which are not in accordance with the present invention, were inferior to the emulsion cosmetics of the Examples in any one of freshness upon application, emulsion stability, and odor over time.

### (Note)

It is understood that the scope of the present invention should not be construed as being limited by the description in this specification, but should be construed only by the description of the claims. It is also understood that the contents of the patent applications and technical standards referenced in this specification are to be incorporated herein as if the contents were specifically set forth herein. Furthermore, the disclosure of Japanese Patent Application No. 2023-069682, filed on April 20, 2023, is incorporated herein by reference in its entirety.

## Claims

1. An alkenyl-group-containing polyoxyalkylene compound of Formula (1),
R¹O-(AO)n-R² (1),
wherein AO is an oxyalkylene group having from 2 to 4 carbon atoms obtained by a dehydration condensation reaction using a phosphinic acid or a phosphinic acid salt, n represents an average number of moles of AO added and is from 3 to 90, R¹ is an alkenyl group having from 3 to 5 carbon atoms, R² is an alkenyl group having from 3 to 5 carbon atoms or a hydrogen atom, and a ratio (Mw/Mn) between a weight average molecular weight (Mw) and a number average molecular weight (Mn) calculated from a chromatogram obtained by gel permeation chromatography measurement is from 1.20 to 5.00.

2. A silicone modifier comprising the alkenyl-group-containing polyoxyalkylene compound according to claim 1.

3. A polyoxyalkylene-modified silicone being a reaction product of the silicone modifier according to claim 2 and a hydrogen organopolysiloxane of Formula (2), 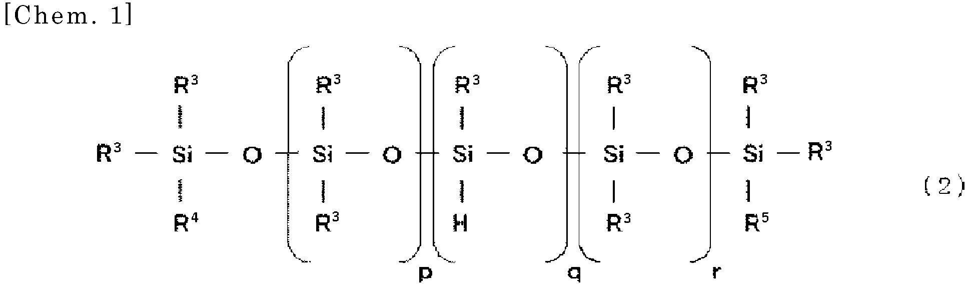 wherein p is from 1 to 100, q is from 0 to 50, r is from 0 to 100, q/(p + r) is from 0 to 1, each R³ is independently an alkyl group having from 1 to 8 carbon atoms, R⁴ and R⁵ are each independently a hydrogen atom or an alkyl group having from 1 to 8 carbon atoms, and when q = 0, at least one of R⁴ and R⁵ is a hydrogen atom.

4. An emulsion composition comprising, (A) from 0.1 to 40 mass% of the polyoxyalkylene-modified silicone according to claim 3, (B) from 1 to 50 mass% of an oil agent that is liquid at 25°C, and (C) from 10 to 98 mass% of water, wherein a mass ratio of Component (B) to Component (A) ((B)/(A)) is from 0.5 to 30.
